(19)

**Europäisches Patentamt**

**European Patent Office**

**Office européen des brevets**

(11) **EP 4 293 668 A1**

(12) **EUROPEAN PATENT APPLICATION**

(43) Date of publication:
**20.12.2023   Bulletin 2023/51**

(21) Application number: **23174984.7**

(22) Date of filing: **24.05.2023**

(51) International Patent Classification (IPC):
***G10L 21/0364*** *(2013.01)*

(52) Cooperative Patent Classification (CPC):
**G10L 21/0208;** G10L 25/78

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.06.2022   GB 202208716**

(71) Applicant: **Nokia Technologies Oy
02610 Espoo (FI)**

(72) Inventors:
- **VILKAMO, Juha Tapio
  00120 Helsinki (FI)**
- **HAVUKAINEN, Kai Petteri
  37500 Lempäälä (FI)**
- **MÄKINEN, Toni
  33950 Pirkkala (FI)**

(74) Representative: **Nokia EPO representatives
Nokia Technologies Oy
Karakaari 7
02610 Espoo (FI)**

(54) **SPEECH ENHANCEMENT**

(57)   Examples of the disclosure relate to speech enhancement that can be adapted for varying sound scenes. In examples of the disclosure a control parameter for speech enhancement is obtained. The control parameter indicates a user preference for speech enhancement. One or more audio signals are obtained and the one or more audio signals are processed to determine a sound classification based at least on the one or more audio signals. The control parameter and the sound classification are used to determine a processing parameter. Speech enhancement is enabled on the one or more audio signals. The speech enhancement uses the processing parameter such that the processing parameter is configured to control proportions of speech and remainder in an output signal.

EP 4 293 668 A1

**Description**

TECHNOLOGICAL FIELD

Examples of the disclosure relate to speech enhancement. Some relate to speech enhancement that can be adapted for varying sound scenes.

BACKGROUND

Speech enhancement is used to increase the intelligibility of speech in audio signals. The amount of speech enhancement that is appropriate can vary for different sound scenes.

BRIEF SUMMARY

According to various, but not necessarily all, examples of the disclosure there may be provided an apparatus comprising means for:

obtaining a control parameter for speech enhancement wherein the control parameter indicates a user preference for speech enhancement;
obtaining one or more audio signals;
processing the one or more audio signals to determine a sound classification based at least on the one or more audio signals;
using the control parameter and the sound classification to determine a processing parameter; and
enabling speech enhancement on the one or more audio signals using the processing parameter such that the processing parameter is configured to control proportions of speech and remainder in an output signal.

The control parameter may be obtained from a control input made by a user.
The control input may be made by the user before the one or more audio signals are captured.
The control parameter may comprise a value where the value indicates a proportion of the output signal that should be speech.
The control parameter may comprise a value where the value indicates a proportion for speech relative to remainder in the output signal.
The sound classification may comprise an indication of a probability that respective signals of the one or more audio signals comprise one or more sound categories.
A first sound category may comprise speech and a second sound category may comprise not-speech.
Processing the one or more audio signals to determine the sound classification may comprise using a machine learning program to classify sounds within the one or more audio signals.
The means may be for using the processing parameter to control mixing of the one or more audio signals.
The means may be for using a product of the control parameter and a value based on the sound classification to determine the processing parameter.
Respective signals of the one or more audio signals may comprise one or more channels.
A machine learning model may be used to enable speech enhancement.
According to various, but not necessarily all, examples of the disclosure there may be provided an electronic device comprising an apparatus as described in any preceding paragraph wherein the electronic device is at least one of: a telephone, a camera, a computing device, a teleconferencing apparatus.
According to various, but not necessarily all, examples of the disclosure there may be provided a method comprising:

obtaining a control parameter for speech enhancement wherein the control parameter indicates a user preference for speech enhancement;
obtaining one or more audio signals;
processing the one or more audio signals to determine a sound classification based at least on the one or more audio signals;
using the control parameter and the sound classification to determine a processing parameter; and
enabling speech enhancement on the one or more audio signals using the processing parameter such that the processing parameter is configured to control proportions of speech and remainder in an output signal.

According to various, but not necessarily all, examples of the disclosure there may be provided a computer program comprising computer program instructions that, when executed by processing circuitry, cause:

> obtaining a control parameter for speech enhancement wherein the control parameter indicates a user preference for speech enhancement;
> obtaining one or more audio signals;
> processing the one or more audio signals to determine a sound classification based at least on the one or more audio signals;
> using the control parameter and the sound classification to determine a processing parameter; and
> enabling speech enhancement on the one or more audio signals using the processing parameter such that the processing parameter is configured to control proportions of speech and remainder in an output signal.

BRIEF DESCRIPTION

Some examples will now be described with reference to the accompanying drawings in which:

> FIG. 1 shows an example apparatus;
> FIG. 2 shows an example device;
> FIG. 3 shows an example method;
> FIG. 4 shows an example method;
> FIG. 5 shows an example method;
> FIG. 6 shows an example structure for a machine learning method; and
> FIGS. 7A and 7B shows example results obtained using examples of the disclosure.

DETAILED DESCRIPTION

Examples of the disclosure relate to apparatus, methods and computer programs for controlling speech enhancements. In examples of the disclosure a processing parameter is generated to determine a proportion of an output signal that should be speech. The processing parameter can control the relative proportions of speech and remainder in the output signal. This processing parameter can be used to control mixing, or other suitable processes applied to one or more audio signals for performing speech enhancement. The processing parameter can be determined based at least on information relating to a user preference for speech enhancement and also information about the types of sounds in the audio channels. The processing parameter can therefore be adapted to take into account different sound scenes while maintaining user preferences. This provides for improved speech enhancement.

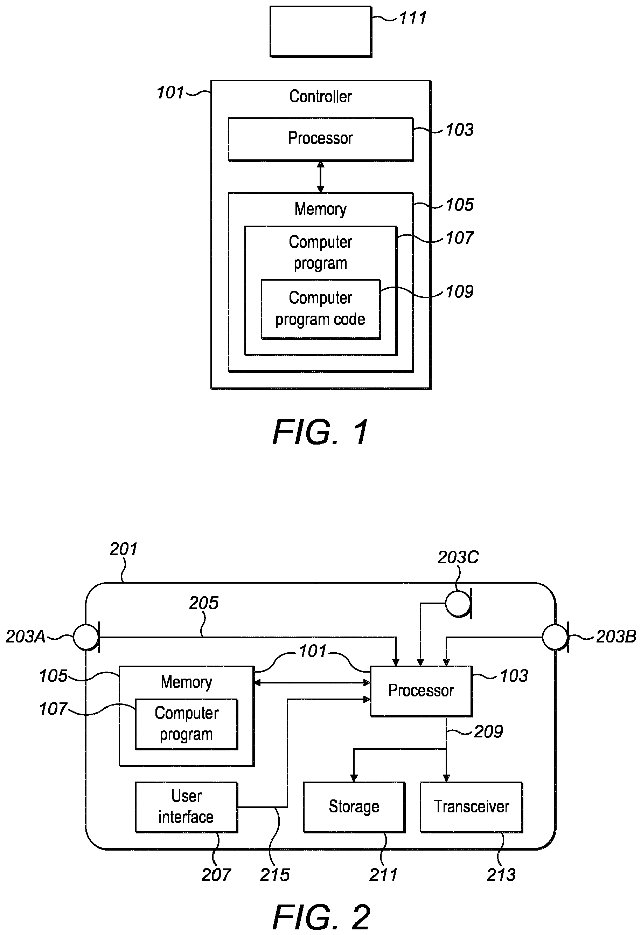

Fig. 1 schematically shows an example apparatus 101 that could be used in some examples of the disclosure. In the example of Fig. 1 the apparatus 101 comprises at least one processor 103 and at least one memory 105. It is to be appreciated that the apparatus 101 could comprise additional components that are not shown in Fig. 1.

The apparatus 101 can be configured to implement examples of the disclosure. The apparatus 101 can be configured to determine a processing parameter for controlling speech enhancement according to examples of the disclosure and/or to perform any other suitable functions.

In the example of Fig. 1 the implementation of the apparatus 101 can be implemented as processing circuitry. In some examples the apparatus 101 can be implemented in hardware alone, have certain aspects in software including firmware alone or can be a combination of hardware and software (including firmware).

As illustrated in Fig. 1 the apparatus 101 can be implemented using instructions that enable hardware functionality, for example, by using executable instructions of a computer program 107 in a general-purpose or special-purpose processor 103 that can be stored on a computer readable storage medium (disk, memory etc.) to be executed by such a processor 103.

The processor 103 is configured to read from and write to the memory 105. The processor 103 can also comprise an output interface via which data and/or commands are output by the processor 103 and an input interface via which data and/or commands are input to the processor 103.

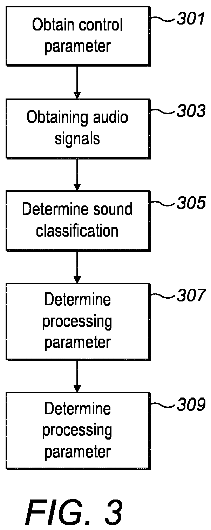

The memory 105 is configured to store a computer program 107 comprising computer program instructions (computer program code 109) that controls the operation of the apparatus 101 when loaded into the processor 103. The computer program instructions, of the computer program 107, provide the logic and routines that enables the apparatus 101 to perform the methods illustrated in Figs. 3 to 5. The processor 103 by reading the memory 105 is able to load and execute the computer program 107.

The apparatus 101 therefore comprises: at least one processor 103; and

> at least one memory 105 including computer program code 109,
> the at least one memory 105 storing instructions that, when executed by the at least one processor 103, cause the apparatus 101 at least to:

obtaining a control parameter for speech enhancement wherein the control parameter indicates a user preference for speech enhancement;
obtaining one or more audio signals;
processing the one or more audio signals to determine a sound classification based at least on the one or more audio signals;
using the control parameter and the sound classification to determine a processing parameter; and
enabling speech enhancement on the one or more audio signals using the processing parameter such that the processing parameter is configured to control proportions of speech and remainder in an output signal.

As illustrated in Fig. 1 the computer program 107 can arrive at the apparatus 101 via any suitable delivery mechanism 111. The delivery mechanism 111 can be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 107. The delivery mechanism can be a signal configured to reliably transfer the computer program 107. The apparatus 101 can propagate or transmit the computer program 107 as a computer data signal. In some examples the computer program 107 can be transmitted to the apparatus 101 using a wireless protocol such as Bluetooth, Bluetooth Low Energy, Bluetooth Smart, 6LoWPan (IP$_v$6 over low power personal area networks) ZigBee, ANT+, near field communication (NFC), Radio frequency identification, wireless local area network (wireless LAN) or any other suitable protocol.

The computer program 107 comprises computer program instructions for causing an apparatus 107 to perform at least the following:

obtaining a control parameter for speech enhancement wherein the control parameter indicates a user preference for speech enhancement;
obtaining one or more audio signals;
processing the one or more audio signals to determine a sound classification based at least on the one or more audio signals;
using the control parameter and the sound classification to determine a processing parameter; and
enabling speech enhancement on the one or more audio signals using the processing parameter such that the processing parameter is configured to control proportions of speech and remainder in an output signal.

The computer program instructions can be comprised in a computer program 107, a non-transitory computer readable medium, a computer program product, a machine readable medium. In some but not necessarily all examples, the computer program instructions can be distributed over more than one computer program 107.

Although the memory 105 is illustrated as a single component/circuitry it can be implemented as one or more separate components/circuitry some or all of which can be integrated/removable and/or can provide permanent/semi-permanent/ dynamic/cached storage.

Although the processor 103 is illustrated as a single component/circuitry it can be implemented as one or more separate components/circuitry some or all of which can be integrated/removable. The processor 103 can be a single core or multi-core processor.

References to "computer-readable storage medium", "computer program product", "tangibly embodied computer program" etc. or a "controller", "computer", "processor" etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term "circuitry" can refer to one or more or all of the following:

(a) hardware-only circuitry implementations (such as implementations in only analog and/or digital circuitry) and
(b) combinations of hardware circuits and software, such as (as applicable):

(i) a combination of analog and/or digital hardware circuit(s) with software/firmware and
(ii) any portions of hardware processor(s) with software (including digital signal processor(s)), software, and memory(ies) that work together to cause an apparatus, such as a mobile phone or server, to perform various functions and

(c) hardware circuit(s) and or processor(s), such as a microprocessor(s) or a portion of a microprocessor(s), that requires software (e.g. firmware) for operation, but the software might not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in the Figs. 3 to 5 can represent steps in a method and/or sections of code in the computer program 107. The illustration of a particular order to the blocks does not necessarily imply that there is a required or preferred order for the blocks and the order and arrangement of the block can be varied. Furthermore, it can be possible for some blocks to be omitted.

Fig. 2 shows an example electronic device 201 comprising an apparatus 101. The apparatus 101 can comprise a memory 105 and a processor 103 as shown in Fig. 1. Corresponding reference numerals are used for corresponding features. The electronic device 201 also comprises a plurality of microphones 203, a user interface 207, storage 211 and a transceiver 213. Only components of the electronic device 201 that are referred to below are shown in Fig. 2. The electronic device 201 can comprise additional components that are not shown.

The electronic device 201 can comprise any device comprising one or more microphones 203. For example, the electronic device 201 could comprise a telephone, a camera a computing device, a teleconferencing apparatus or any other suitable type of electronic device 201.

The microphones 203 can comprise any means that can be configured to detect audio signals. The microphones 203 can be configured to detect acoustic sound signals and convert the acoustic signals into an output electric signal. The microphones 203 therefore provide microphone signals 205 as an output. The microphone signals 205 can comprise audio signals.

In the example of Fig. 2 the electronic device 201 the electronic device 201 comprises three microphones 203. A first microphone 203A is provided at a first end of the electronic device 201. A second microphone 203B is provided at a second end of the electronic device 201, a third microphone 203C is provided on the rear of the electronic device 201. Other numbers and arrangements of microphones 203 could be used in other examples of the disclosure. For instance, in some examples the device 201 could comprise just one microphone 203.

In examples where the device 201 comprises a plurality of microphones 203 the microphones can be configured to enable beamforming, spatial audio capture, and/or other multi-microphone applications. In such examples multi-microphone processing methods could be applied together with the methods of this disclosure. If the device 201 only comprises one microphone 203 then spatial audio capture and/or other multi-microphone applications would not be used.

The microphones 203 of the electronic device 201 can be configured to capture the sound scene around the electronic device 201. The sound scene can comprise different types of sounds. The different types of sounds could comprise speech, music, ambient sounds, and/or any other suitable type of sounds.

The electronic device 201 is configured so that the audio signals 205 from the microphones 103 are provided to the processor 103 as an input. The audio signals 205 can be provided to the processor 103 in any suitable format. In some examples the audio signals 205 can be provided to the processor 103 in a digital format. The digital format could comprise pulse code modulation (PCM) or any other suitable type of format. In other examples the microphones 203 could comprise analog microphones 203. In such examples an analog-to-digital converter can be provided between the microphones 203 and the processor 103.

The processor 103 can be configured to process the audio signals 205 to perform speech enhancement of the audio signals 205. The speech enhancement comprises processing the audio signals 205 so as to increase the intelligibility of the speech. The speech enhancement can be relative. That is, portions of the audio signals 205 that are identified as speech can be enhanced and/or portions of the audio signals that are identified as not being speech can be attenuated.

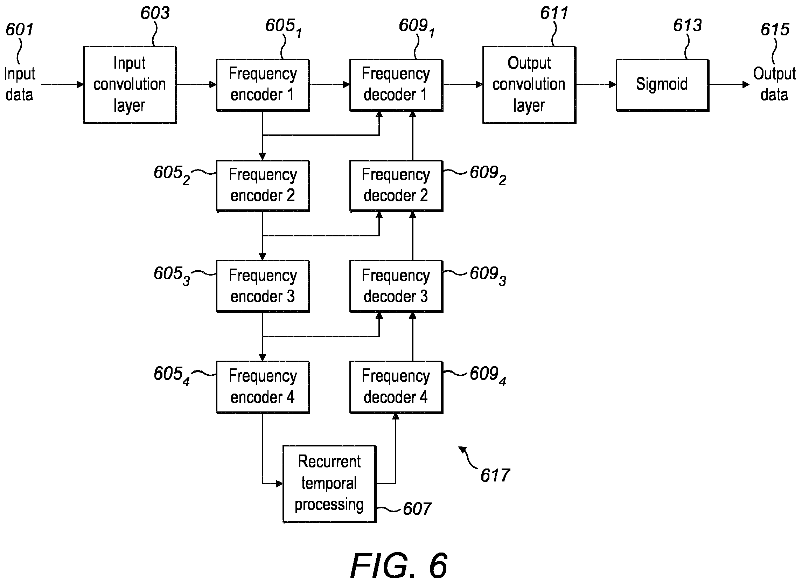

The processor 103 can be configured to use methods as shown in Figs. 3 to 5 to perform the speech enhancement. In some examples the processor 103 can be configured to use a trained machine learning model to perform at least some of the speech enhancement. The trained machine learning model could be as shown in Fig. 6 or could have any other suitable structure. The trained machine learning model could be stored in the memory 105 or in any other suitable location.

The user interface 207 can comprise any means that enables a user to interact with the device 201. The user interface 201 can comprise a user input means that enables a user to make a control input. For example, the user interface 207 could comprise one or more control elements that can be actuated by a user. In response to actuation of the control elements a control signal 215 is provided from the user interface 207 to the processor 103. The control signal 215 comprises information relating to the control element that has been actuated and is used to control one or more processes performed by the processor 103.

The control elements can comprise any means that can be actuated by a user. In some examples the control elements could comprise items displayed on a touch sensitive display. The user can actuate the control elements by making an appropriate input on the area of the touch sensitive display that the control element is displayed in.

Other means for enabling user inputs could be used in other examples. For instance, gesture recognition, voice recognition, mechanical user inputs, and/or any other type of user input device could be used.

The user interface 207 could also be configure to enable control of other functions of the device 201. For instance, the user interface could be configured to enable a user to control when to start sound capture, when to stop sound capture, when to store audio signals, when to transmit audio signals, and/or any other appropriate functions.

In some examples the user interface 207 is configured to enable a user to indicate their user preference for speech enhancement settings. For example, the user could use the user interface 207 indicate if they would prefer high levels of speech enhancement or low levels.

When the user interface 207 detects the user input indicating the user preference for the speech enhancement the control signals 215 is sent from the user 207 interface to the processor 103 indicating the user preferences for speech enhancement.

The processor 103 is configured to use the control signal 215 to process the one or more audio signals 205 and provide an output signal 209. In examples of the disclosure the output signal 209 could be a speech enhanced signal. Other types of processing could also be applied so that the output signal could be a spatial audio signal, and/or any other type of signal.

The output signal 209 can be provided in any suitable format. For example, if the output signal is a spatial audio signal then the output signal 209 could be provided in an encoded form such as an Immersive Voice and Audio Stream (IVAS), a binaural audio signal, a surround sound loudspeaker signal, Ambisonic audio signals or any other suitable type of spatial audio output. Other formats for the output signal 209 could also be used.

The device 201 shown in Fig. 2 comprises storage 211 and a transceiver 213. The processor 103 is coupled to the storage 211 and/or the transceiver 213 so that the output signal 209, ad/or any other outputs, from the processor 103 can be provided to the storage 211 and/or the transceiver 213.

The storage 211 can comprise any means for storing the output signal 209 and/or any other outputs from the processor 103. The storage 211 could comprise one or more memories or any other suitable means. The output signal 209 can be retrieved from the storage 211 at a later time. This can enable the electronic device 201 to render the output signal 209 at a later time or can enable the output signal 209 to be transmitted to another device.

The transceiver 213 can comprise any means that can enable data to be transmitted from the electronic device 201. This can enable the output signal 209, and/or any other suitable data, to be transmitted from the electronic device 201 to an audio rendering device or any other suitable device.

In some examples the output signal 209 can be associated with other information. For instance, the output signal 209 can be associated with images such as video images. The images or video images could be captured by a camera of the electronic device 201. The output signal 209 can be associated with the other information so that the output signal 209 can be stored with this information and/or can be transmitted with this other information. The association can enable the images or other information to be provided to a user of the rendering device when the output signal 209 is rendered.

Devices 201 other than the device 201 shown in Fig. 2 can be used to implement examples of the disclosure. For instance, in the example of Fig. 2 the processor 103 obtained the audio signals 205 from the microphones 203 of the device 201. In other examples the processor 103 could receive the audio signals 205 from a different source, such as the storage 211 or the transceiver 213.

In some examples the speech enhancement processing does not need to be performed by a user device 201 such as the device 201 shown in Fig. 1. For example, a network device such as a server could be configured to receive the audio signals 205 and an indication of the user's preference for speech enhancement. The network device could then be configured to perform the speech enhancement according to examples of the disclosure.

Fig. 3 shows an example method that could be performed using an apparatus 101 and/or electronic device 201 as shown in Figs. 1 and 2.

At block 301 the method comprises obtaining a control parameter wherein the control parameter indicates a user preference for speech enhancement. In some examples the control parameter could indicate a category of speech enhancement that is preferred by a user. The categories could be high, medium and low or any other suitable numbers and/or types of categories. In some examples the control parameter can indicate a proportion of speech in an output signal that is preferred by a user and/or could indicate any other suitable preference.

The control parameter can be obtained from a control input made by a user of a device 201 such as the device 201 shown in Fig. 2 or a user of any other suitable type of device 201. The control input could be made using a user interface 207 and/or any other suitable means. The control input can be made by the user before audio signals are captured or obtained for processing. For instance, the device 201 can be configured to enable a user to pre-set their preferences for speech enhancement.

The control parameter can comprise a value where the value indicates a proportion of the output signal that should be speech. For example, the control parameter can comprise a value where the value indicates a proportion of the output signal that should be speech and/or a proportion of an output signal that should be remainder. The value can indicate the relevant proportions directly or indirectly. The value of the control parameter can be used in combination with the classification of the sound, and/or any other relevant information, to process the audio signals. The control parameter can therefore control the proportions of speech and remainder within the output signal.

In some examples the control parameter could take one of a plurality of discrete values. The discrete values could be predefined. As an example, a user interface 207 could be configured to indicate a menu of options for speech enhancement to a user. The options could comprise predefined options such as high, medium, or low. A user could then make a user input indicating one of the options and a control input can be generated comprising a control parameter indicating whether, high medium or low has been selected. Other options for enabling discrete variations in the control parameter could be used as appropriate.

In some examples the control parameter could take a value from a continuously variable range. The limits of the range could be predefined. For example, the lower limit could be zero and the upper limit could be one. As an example, a user interface 207 could be configured to indicate a slider for controlling speech enhancement preferences. A user can control the value of the control parameter by controlling the position of the slider. Other options for enabling continuous variations in the control parameter could be used as appropriate.

At block 303 the method comprises obtaining one or more audio signals 205. The one or more audio signals can be captured by one or more microphones 203. The audio signals can be an audio signal having one channel or an audio signal having a plurality of channels.

The audio signals can be obtained in any suitable format.

At block 305 the method comprises processing the one or more audio signals 205 to determine a sound classification. The sound classification classifies sounds within the one or more audio signals 205.

The sound classification can comprise classification data. The classification data can comprise an indication of a probability that respective signals of the one or more audio signals comprise one or more respective sound categories. The sound categories can comprise any suitable categories. In some examples the sound categories could comprise at least one speech category and at least one non-speech category. The non-speech category could comprise music, ambient sounds, and/or other types of sounds.

Any suitable means can be used to process the audio signals 205 to determine the sound classification. In some examples a machine learning program could be used to generate the sound classification.

At block 307 the method comprises using the control parameter and the sound classification to determine a processing parameter. The processing parameter is configured to control the proportion of speech and remainder in an output signal. The processing parameter can determine at least a proportion of the output signal that should be speech or any other suitable metric of the speech enhancement processing.

The method therefore uses the processing parameter to control proportions of speech and remainder in output signals. The remainder can comprise sounds that are not speech or not determined to be speech. The remainder can comprise noise, ambient sounds and/or any other suitable sounds. The control parameter can enable the controlling of the respective proportions by controlling a mixing of a separated speech signal and the signal with all sounds. When the control parameter controls the mixing to use more of the speech and less of the signal with all sounds, then the proportion of the non-speech sounds (the remainder signals) is reduced. As is shown by the present examples, is not necessary to actually separate the remainder signals in order to modify the proportion of the remainder (non-speech) signals in the processed output.

The control of the respective proportion of speech and remainder through the use of the processing parameter can be linear or non-linear. In some cases other factors in addition to the processing parameter can affect the respective proportion of speech and remainder.

In some examples the separation of speech from a remainder sound is not fully achieved, either by limitations of the methods to fully separate speech, or intentionally. For example, in some examples sounds belonging to categories other than speech can be separated along with a speech signal. For example, laughter, whistling, singing, or music could be separated with the speech. In such cases, when the processing parameter is configured to control proportions of speech and remainder signals, it controls the proportion of these other sounds along with the speech signal.

Any suitable means can be used to determine the user processing parameter. Both the control parameter and the sound classification are used to determine the processing parameter so that the processing parameter takes into account both the user preferences and the different types of sound in the captured sound scene.

In some examples the processing parameter can be determined from a product of the control parameter and a value based on the sound classification. Other combinations of the control parameter and the sound classification could be used to determine the processing parameter in other examples.

Once the processing parameter has been determined, then at block 309, speech enhancement can be performed on the one or more audio signals. The speech enhancement uses the processing parameter. The speech enhancement can use the processing parameter to control the proportion of speech in an output signal 209 or to control any other suitable metric.

The processing parameter makes the speech enhancement adaptable because it takes into account the user preferences but can also be adapted for the different types of sound in the captured sound scene.

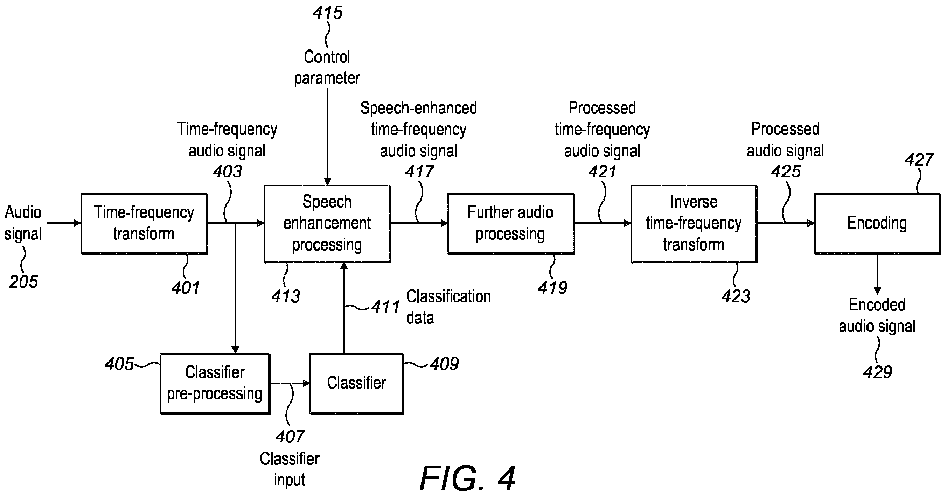

Fig. 4 shows an example method. The method could be performed by the processor 103 in the electronic device 201 as shown in Fig. 2 or by any other suitable apparatus 101.

The processor 103 can receive audio signals 205 as an input. The audio signals 205 comprise audio signals that are output by the microphones 203. The audio signals 205 comprise data that represent sound. The processor 103 can receive one or more audio signals 205 as an input. An audio signal 205 can comprise one or more channels.

The audio signals 205 are provided to a time-frequency transform block 401. The time-frequency transform block 401 is configured to apply any suitable time-frequency transform to convert the audio signals 205 from the time domain. The audio signals 205 can be converted from the time domain to frequency bins.

In some examples the time-frequency transform block 401 could be configured to perform a transform comprising a Short-Time Fourier Transform (STFT). The STFT can be configured to take a frame of 1024 samples of the audio signals 205, concatenate the frame with the previous 1024 samples, apply a square-root of the 2*1024 length Hanning window to the concatenated frames, and apply a fast Fourier transform (FFT) to the result. Other transforms could be used in other examples.

The time-frequency transform block 401 provides an output comprising time-frequency audio signals 403. The time-frequency audio signals 403 are provided to a classifier pre-processing block 405 and a speech enhancement processing block 413.

The classifier pre-processing block 405 is configured to extract audio features within the time-frequency audio signals 403. The extraction of the audio features enables distinguishable characteristics of the audio spectrum and its time domain shape to be obtained for the time-frequency audio signals 403. In some embodiments the classifier pre-processing block 405 also uses the audio signals 205 in the feature extraction.

The audio features that are extracted from the time-frequency audio signals 403 could comprise any suitable features. In some examples the audio features could comprise 13 Mel-Frequency Cepstral Coefficients (MFCC) with their delta and delta-delta variables, spectral centroid, spectral spread, bandwidth, zero-crossing rate (ZCR) and gradient index (GIN). This can result in an audio feature set comprising 43 audio features per frame.

The audio features can be extracted from short-time windows. For example, 40 milliseconds frames with 50% overlap due to the STFT could be used. Once the audio features have been extracted from short-time windows longer time segments can be constructed. For example, time segments of 1.5 seconds could be constructed by taking a median value of each audio feature over the time segment. This produces median feature vector elements. Instead of median feature vector, also other metrics could be used to form the segment feature vector, such as mean or any other suitable metric.

Obtaining the median feature vector elements over longer time segments, instead of extracting them frame-wise, increases the stability of the classification process and helps to prevent fluctuations between different classes.

The median feature vector elements obtained from each time segment are scaled so as to ensure a similar data range for all audio features. This helps to prevent audio features having values in greater numeric ranges dominating the audio features having numerical values in smaller numeric ranges. In some examples the median feature vector elements obtained from each time segment can be scaled between -1 and 1 or could be normalized. If the median feature vector elements are normalized they can be normalized with respect to average median and standard deviation values.

The scaling of the median feature vector elements can also provide the benefit that it helps to avoid numerical inaccuracies during the calculations. The numerical inaccuracies could be caused by very large and/or very small values in the feature vector.

Following the scaling the classifier pre-processing block 405 provides an output comprising a classifier input 407. The classifier input 407 comprises information relating to the audio features in the time-frequency audio signal. The information relating to the audio features can be provided as audio feature vectors or in any other suitable format.

The classifier input 407 is provided as an input to the classifier block 409. The classifier block 409 is configured to classify the audio content in the audio signals 205. In examples of the disclosure the classifier block 409 uses audio features from the classifier input and maps these audio features to different respective categories to generate a sound classification. The sound classification classifies sounds within the audio signals 205. In this example the sound classification comprises classification data 411.

The classifier block 409 can use any suitable means to generate the classification data 411, or other sound classification, from the classifier input 407.

The classifier block 409 can be configured to classify the sounds the within the audio signals 205 into any suitable sets or categories. In some examples the categories could comprise at least one speech category and at least one not-speech category. The not-speech category could comprise music and/or any other type of sound.

In some examples the classification data 411 could comprise probability values corresponding to different sound categories. The probability values indicate the confidence that the audio signal 205 comprises sounds within the respective categories. As an example, the classifier block 409 could be configured to identify three categories, "speech", "music", or "other". In this case the classification data 411 would comprise probability values for the respective categories. The probability values could be denoted $P_s(n)$, $P_m(n)$ and $P_o(n)$, respectively where $n$ is a temporal index and where $P_s(n) + P_m(n) + P_o(n) = 1$.

In some examples the classifier block 409 can update the classification data 411 with a lower temporal resolution than the temporal index $n$. In such cases the probabilities could be constant over multiple temporal indices $n$.

In some examples the classifier block 409 could use a machine learning program to generate the classification data or other sound classifications.

The machine learning model can be a pre-trained machine learning model. The machine learning can comprise a neural network or any other suitable type of trainable model. The term "Machine Learning Model" refers to any kind of artificial intelligence (AI), intelligent or other method that is trainable or tuneable using data. The machine learning model can comprise a computer program. The machine learning model can be trained to perform a task, such as classifying audio features to obtain a sound classification, without being explicitly programmed to perform that task. The machine learning model can be configured to learn from experience E with respect to some class of tasks T and performance measure P if its performance at tasks in T, as measured by P, improves with experience E. in these examples the machine learning model can often learn from reference data to make estimations on future data. The machine learning model can be also a trainable computer program. Other types of machine learning models could be used in other examples.

It is also possible to train one machine learning model with specific architecture, then derive another machine learning model from that using processes such as compilation, pruning, quantization or distillation. The term "Machine Learning Model" covers all these use cases and the outputs of them. The machine learning model can be executed using any suitable apparatus, for example CPU, GPU, ASIC, FPGA, compute-in-memory, analog, or digital, or optical apparatus 101. It is also possible to execute the machine learning model in apparatus that combine features from any number of these, for instance digital-optical or analog-digital hybrids. In some examples the weights and required computations in these systems can be programmed to correspond to the machine learning model. In some examples the apparatus 101 can be designed and manufactured so as to perform the task defined by the machine learning model so that the apparatus 101 is configured to perform the task when it is manufactured without the apparatus 101 being programmable as such.

The training of the machine learning model could be performed by a system that is separate to the apparatus 101. For example, the machine learning model could be trained by a system or other apparatus that has a higher processing capacity than the apparatus 101 of Fig. 1. In some examples the machine learning model could be trained by a system comprising one or more graphical processing units (GPUs) or any other suitable type of processor.

The machine learning model could make use of any suitable algorithms such as as k-Nearest Neighbour (kNN), Self-Organizing Map (SOM), Support Vector Machine (SVM) and/or any other suitable algorithms. In some examples AI and/or deep learning-based classifiers could be used by the classifier block 409. An example of a deep learning-based classifier that could be used is a Convolutional Neural Network (CNN).

In some examples an SVM could be used by the classifier block 409 because this is sufficiently reliable in classifying the audio features and does not require too many computation resources. The SVM can comprise a supervised binary classifier that receives training data with known class labels as an input. In this case the training data would comprise the extracted audio feature vectors that are comprised within the classifier input 407. The SVM can be configured to find a line or possibly a multi-dimensional (hyper)plane that separates two classes in the feature space. The SVM algorithm is configured to maximize, or substantially maximize, the distance to the nearest samples of both classes from the hyperplane. These nearest samples are called "support vectors". The obtained hyperplane shape is dependent on the underlying kernel function. Any suitable functions such as which linear, polynomial, sigmoid, or radial basis functions can be used for the kernel function. The most suitable function to use for the kernel function depends on the case. For example, a linear kernel is not suitable for a non-linear classification problem. For a non-linear classification problem a transformation to a higher feature space dimension (a so-called kernel trick) should be applied instead. For cases that comprise classification into a plurality of classes a plurality of SVM binary outputs are combined at the end of each classification task to find the most probable output class. In some examples a library such as a libSVM, or any other suitable type of library, could be used by the classifier block 409. An example type of SVM that could be used would be a C-Support Vector Classification (C-SVC) and radial basis function could be used as a kernel function.

In some examples the classifier block 409 could comprise an SVM classifier model. The SVM classifier model could be trained using the libSVM with class probabilities option enabled so that the probabilities are provided for each output class. In such examples the classifier block 409 would provide an output comprising these probabilities for every audio feature vector from the input signal fed to it during the processing as opposed to providing just an indication of the most probable class.

In some examples the classifier block 409 could be configured to apply a deep learning classifier such as a CNN or other suitable classifier. In such cases the CNN could be configured to use a pre-processed input such as the classifier input 407 or could be configured to use a signal that has not been pre-processed such as the time-frequency audio signal 403.

In the example of Fig. 4 the classification block 409 provides classification data 411 as an output. The classification data 411 is an example of a sound classification. The sound classification can comprise any data that classifies sounds within the audio signals 205. The sound classification or classification data 411 can comprise an indication of a category of sound such as speech or not speech. In some examples the sound classification or classification data 411 can comprise an indication of a probability for the different categories of sound.

The classification data 411 is provided as an input to a speech enhancement processing block 413. The speech enhancement processing block 413 also received the time-frequency audio signals 403 and a control parameter 415 as an input. The time-frequency audio signals 403 can be received from the time-frequency transform block 401.

The control parameter 415 can be received from a user interface 207, or retrieved from a memory 105, or from any other suitable source. The control parameter 415 indicates a user preference for speech enhancement. For example, the control parameter 415 can indicate a user preference for a proportion of speech in an output signal. In some examples the control parameter 415 can comprise a numerical value where the numerical value indicates the user preference for a proportion of speech in an output signal. The relationship between the numerical value and the proportion of speech in an output signal can be linear or non-linear.

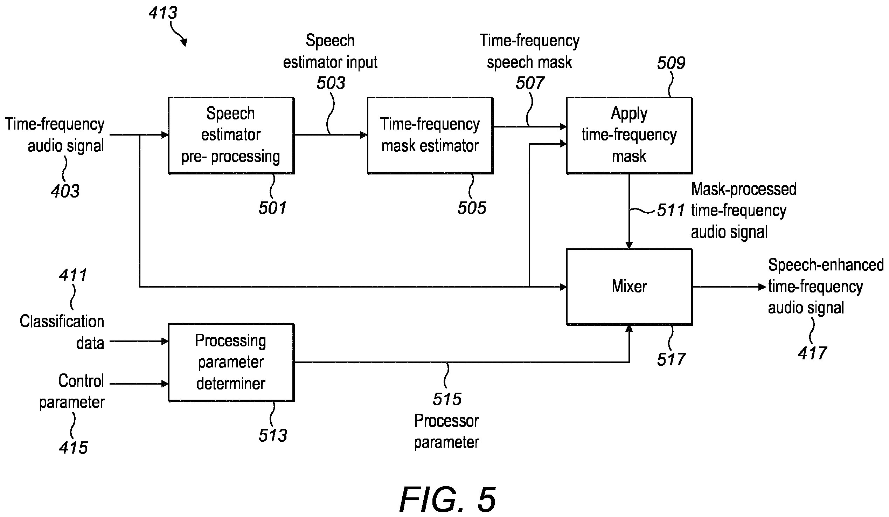

The speech enhancement processing block 413 is configured to use the control parameter 415 and the classification data 411 to control the speech enhancement process. An example of a speech enhancement processing block 413 is shown in more detail in Fig. 5.

The speech enhancement processing block 413 provides a speech-enhanced time-frequency audio signal 417 as an output. The speech-enhanced time-frequency audio signal 417 is provided to a further audio processing block 419. The audio signal can comprise one or more audio channels.

The further audio processing block 419 can be configured to perform any suitable type of audio processing on the speech-enhanced time-frequency audio signal 417. Examples of processing that could be performed could comprise spatial audio processing, automatic gain control, dynamic processing, limiter, equalization, or any other suitable type of processing. The audio processing performed by the further audio processing block 419 can be configured to enhance one or more qualities of the audio signals 205.

As an example, if the audio signals 205 comprise signals 205 captured by a plurality of microphones 203 then the further audio processing block 419 can be configured to perform spatial audio processing. The spatial audio processing could comprise equalizing the speech-enhanced time-frequency audio signal 417, analysing sound directions in frequency bands, analysing diffuseness for example by obtaining a ratio of direct to ambient sound in frequency bands, applying wind noise removal, applying microphone noise removal, using the directions and ratios to process the signals to a spatial audio signal such as a binaural signal, and applying automatic gain control. This is just one example and other processes, and combinations of processes could be used in other examples.

In other examples the further audio processing block 419 might not perform any spatial audio processing based on the directions and ratios. In such examples the spatial audio processing can be performed at a remote device using spatial metadata (i.e. the directions and ratios).

In other examples the further audio processing block 419 might not be used.

In other examples the audio signal 205 could comprise only a single channel and in such examples there would be no spatial audio processing. In these examples the further audio processing block 419 could be configured to provide processing that is not spatial audio processing or might not be used.

The further audio processing block 419 provides a processed time-frequency audio signal 421 as an output. The processed time-frequency audio signal 421 is provided to the inverse time-frequency transform block 423.

The inverse time-frequency transform block 423. Is configured to perform an inverse time-frequency transform. The inverse time-frequency transform that is performed by the inverse time-frequency transform block 423 corresponds to the transform that is performed by the time-frequency transform block 401. For instance, if the time-frequency transform block 401 is configured to perform an STFT then the inverse time-frequency transform block 423 would be configured to perform an inverse STFT. Other types of transforms could be used in other examples.

The inverse time-frequency transform block 423 provides a processed audio signal 425 as an output. The processed audio signal 425 can be provided in any suitable format. In some examples the processed audio signal 425 could comprise a PCM signal.

In the example of Fig. 4 the processed audio signal 425 is provided to an encoding block 427. The encoding block 427 can be an optional block and so it might not be present in some examples of the disclosure.

The encoding block 427 can be configured to encode the processed audio signal 425 using any suitable protocol. For examples the processed audio signal 425 can be encoded with AAC (Advanced Audio Coding) or EVS (Enhanced Voice Services). The encoding can be performed with or without any parametric multi-channel encoding schemes such as parametric stereo. The protocol that is used to encode the processed audio signal 425 can be dependent on the use case for the audio signals.

In some examples additional data can be encoded with the processed audio signal 425. For instance, the additional data could be spatial metadata. The encoding block 427 could be configured to receive the spatial metadata as an input from the further audio processing block 419. The encoding block 427 can then encode the spatial metadata and multiplex the encoded spatial metadata with the encoded audio signals.

The encoding block 427 provides as encoded audio signal 429 as an output. This could be the output 209 of the processor 103 as shown in Fig. 2. This encoded audio signals 429 could be provided to storage 211 and/or to a transceiver 213. In other examples where the encoding block 427 is not used the output 209 of the processor could be the processed audio signal 425, and or any other suitable signal.

Fig. 5 shows an example method that could be performed by the speech enhancement processing block 413.

In the example speech enhancement processing block 413 of Fig. 3 the time-frequency audio signal 403 is provided as an input to a speech estimator pre-processing block 501. The speech enhancement processing block 413 is configured to process the time-frequency audio signal 403 to generate a speech estimator input 503. The speech estimator input can convert data from the time-frequency audio signal 403 into a format that can be used for estimation of time-frequency masks.

Any suitable process can be used to generate the speech estimator input 503. In some examples the speech estimator input 503 can be generated by generating a normalized spectrogram in decibels and in a logarithmic frequency resolution based on the time-frequency audio signal 403 and/or by using any other suitable process.

As an example, for generating a speech estimator input 503 the time-frequency audio signal 403 can be denoted $S(b,n,i)$ where $b$ is the frequency bin index of the time-frequency transform, $n$ is the temporal index as described previously, and $i$ is the channel index. The frequency bins are grouped in bands $k$ where each band has a lowest frequency bin $b_{low}(k)$ and a highest frequency bin $b_{high}(k)$. The energy value in decibels in frequency bands is formulated by

$$E_{dB}(n,k) = 10 \log_{10} \sum_{b=b_{low}(k)}^{b_{high}(k)} \sum_{i=1}^{N_{ch}} |S(n,b,i)|^2$$

where $N_{ch}$ is the number of channels. The logarithm operation can be bottom limited to avoid numerical instabilities. For each $n$ and $k$, a max value $E_{dB\_max}(n,k)$ can be obtained by preserving the values $E_{dB}(n,k)$ over the last 64 temporal indices (that is, for range $n$-63, ..., $n$), and selecting the largest of them as $E_{dB\_max}(n,k)$, for respective bands $k$ independently. The data is lower limited to avoid large negative decibel values by

$$E'_{dB}(n,k) = \max \left( E_{dB}(n,k), E_{dB\_max}(n,k) - 60 \right)$$

The mean value is formulated by

$$E'_{dB\_mean}(n,k) = (1 - \beta)E'_{dB}(n,k) + \beta E'_{dB\_mean}(n-1,k)$$

where $\beta$ is an IIR averaging factor, for example 0.99, and $E'_{dB\_mean}(0,k) = 0$.

The variance of the data is formulated by

$$E'_{dB\_var}(n,k) = (1 - \beta)\left[ E'_{dB}(n,k) - E'_{dB_{mean}}(n,k) \right]^2 + \beta E'_{dB\_var}(n-1,k)$$

Where $E'_{dB\_var}(0,k) = 0$. The standard deviation is given by:

$$E'_{dB\_std}(n,k) = \sqrt{E'_{dB\_var}(n,k)}$$

The data is normalized to obtain the speech estimator input 503, which is a normalized spectrogram, by

$$I(n,k) = \frac{E'_{dB}(n,k) - E'_{dB\_mean}(n,k)}{E'_{dB\_std}(n,k)}$$

$E'_{dB\_std}(n,k)$ may have been bottom limited by a small value (e.g., 0.1) to avoid numeric instabilities.

In some examples, subsequent blocks of the speech enhancement processing block 413 might require the history of the normalized spectrogram $I(n,k)$. In such examples a suitable number of previous temporal indices of the data is preserved by the speech estimator pre-processing block 501. This historical data can then be provided with the normalized spectrogram $I(n,k)$ as the output of the speech estimator pre-processing block 501.

In some examples the speech estimator pre-processing block 501 might not be used. For instance, if a machine learning program is used for subsequent blocks in the speech enhancement processing block 413 then the machine learning program could be configured to receive the time-frequency audio signals 403 as a direct input. In such examples the steps performed by the speech estimator pre-processing block 501 could be incorporated as part of the machine learning program itself.

The output of the speech estimator pre-processing block 501 is the speech estimator input 503. The speech estimator input 503 is provided as an input to the time-frequency mask estimator block 505.

The time-frequency mask estimator block 505 is configured to process the speech estimator input 503 to generate a time-frequency speech mask 507. The time-frequency mask estimator block 505 can use any suitable means and/or processes to generate the time-frequency speech mask 507. In some examples the time-frequency mask estimator block 505 can use a machine learning program to generate the time-frequency speech mask 507.

In the example of Fig. 5 the time-frequency mask estimator block 505 is configured to process the speech estimator input 503. As mentioned previously, in other examples the time-frequency mask estimator block 505 could be configured to process other inputs such as the time-frequency audio signal 403.

In the example of Fig. 5 the time-frequency mask estimator block 505 is configured to a apply a pre-trained machine learning model to the speech estimator input 503. In this case the pre-trained machine learning model could be applied to the values of the normalized spectrogram. This generates the time-frequency speech mask 507. An example of a pre-trained machine learning model is shown in Fig. 6.

The time-frequency speech mask 507 comprises an indication of the portion of speech signals within the time-frequency audio signals 403. The time-frequency speech mask 507 can comprise a set of gains. The gains can indicate for the current temporal index $n$ for bands $k$ the amplitude portion of the speech signal in the time-frequency audio signals 403. The gains can have any suitable values. The gains can have values between 0 and 1. In this example the gains can be real-valued. In some examples the gains can be complexed valued and can be determined for each bin of the time-frequency audio signals 403. If the gains are complex valued this can enable the phase, as well as the amplitude, of the time-frequency audio signals 403 to be modified.

The time-frequency speech mask 507 comprises the mask gains $M(n,k)$. The time-frequency speech mask 507 is provided as an output of the time-frequency mask estimator block 505.

The time-frequency speech mask 507 is provided as an input to the apply time-frequency mask block 509. The apply time-frequency mask block 509 also receives the time-frequency audio signals 403 as an input.

The apply time-frequency mask block 509 is configured to apply the mask gains $M(n,k)$ to the time-frequency audio signals 403. For instance, the mask gains $M(n,k)$ can be simply applied to the time-frequency audio signals 403 by

$$S'(b,n,i) = M(n,k)S(b,n,i)$$

where band $k$ is the one where bin $b$ resides. This is an example of extracting a speech signal $S'(b,n,i)$ having one or more channels $i$ from the corresponding one or more channels $i$ of the time-frequency audio signals 403.

Other methods for obtaining the mask-processed time-frequency audio signals 511 could be used in examples of the disclosure. For instance, a minimum-variance distortionless response (MVDR) beamformer can be implemented. The beamformer can be configured to steer the beams towards speech sources. Such beam steering can be performed by estimating the speech covariance matrix and finding the eigenvector corresponding to the largest eigenvalue. That eigenvector can be used as the steering vector in the MVDR formula. The needed speech covariance matrix can be estimated using a machine learning program or any other suitable means. The masks can be applied after the beam has been steered towards the speech sources. The use of the steered beams can enable the mask-processed time-frequency audio signals 511 $S'(b,n,i)$ to better represent the speech portion. This method preserves the original amplitude and phase-relationships of the speech components within the channels $i$ by applying the estimated speech steering vector to an extracted single-channel (beamformed and mask-processed) speech signal.

Other suitable processes could also be used. The other processes could be used instead of the methods described, or in addition to the methods described.

The apply time-frequency mask block 509 provides the mask-processed time-frequency audio signals 511 as an output. The mask-processed time-frequency audio signals 511 can be denoted $S'(b,n,i)$.

The speech enhancement processing block 413 also comprises a processing parameter determiner block 513. The processing parameter determiner block 513 is configured to receive the classification data 411 or other sound classification as an input. The processing parameter determiner block 513 is also configured to receive the control parameter 415 as an input.

The processing parameter determiner block 513 is configured to use the classification data 411 or other sound classification and the control parameter 415 to determine a processing parameter 515. The processing parameter 515 can indicate a mixing value for the speech enhancement. The processing parameter 515 can be used to control how much of the overall processed output is the extracted speech component and how much of the overall processed output is the remainder.

The processing parameter determiner block 513 is configured to determine the processing parameter 515 so that it accounts for both the user preferences and the characteristics of the sound scene. The use of the control parameter 415 enables the user preferences to be taken into account. The use of the classification data 411 or other sound classification enables the characteristics of the sound scene to be taken into account.

For example, the processing parameter 515 could be determined by

$$g(n) = [P_s(n)c_s + P_m(n)c_m + P_o(n)c_o]u(n)$$

where $c_s$, $c_m$ and $c_o$ are sound class default processing values for "speech", "music" and "other" and $u(n)$ is a value indicated by the control parameter 415. The default processing values could have any suitable vales, for example they could be 0.95, 0.0 and 0.4, respectively. The value indicated by the control parameter 415 could also have any suitable value. For instance, it could take a value between 0 and 1 where 0 would indicate a user preference for no processing and 1 would indicate a user preference for maximum processing.

In some examples the probability values can be smoothed over time before the processing parameter 515 is determined. In some examples the probability values can be energy weighted so that in the averaged probabilities the frames with higher energies have a greater weighting.

The above-mentioned formula for the processing parameter 515 provides a simple but broadly applicable implementation. In this example if the user indicates a preference for high levels of speech enhancement the maximum speech enhancement processing, or other high levels of speech enhancement processing, would be performed when the speech signal is the predominant signal. However, the maximum speech enhancement processing, or other high levels of speech enhancement processing would not be performed if other types of sound such as music were predominant in the audio signals 205, even if the user has indicated the preference for the high levels of speech enhancement.

In some examples other formulas could be used to determine the processing parameter 515 such as

$$g(n) = P_s(n)f_s(u(n)) + P_m(n)f_m(u(n)) + P_o(n)f_o(u(n))$$

where $f_{s,m,o}(u(n))$ refers to functions that map $u(n)$ to specific class gains between 0..1. For example, $f_m(u(n))$, that is, the function for music could be a function that is zero when $0 < u(n) < 0.5$ and then interpolates to 0.9 when $u(n)$ approaches 1. This means that the music starts to be suppressed only when the user control is above a given threshold such as 0.5. Similarly, the control for speech $f_s(u(n))$ could be configured so that it is zero when $u(n)$ is zero and interpolates to 0.9 when $u(n)$ becomes 0.5, and is constant 0.9 when $u(n) > 0.5$. Furthermore, the control for other sounds $f_o(u(n))$ could interpolate linearly from zero when $u(n) = 0$ to 0.9 when $u(n) = 1$. Other formulas or tunings could be used in other examples.

The processing parameter determiner block 513 provides the processing parameter 515 $g(n)$ as an output.

The mixer block 517 is configured to receive the time frequency audio signal 403, the mask processed time-frequency audio signal 511 and the processing parameter 515 as inputs. The mixer block 517 is configured to use the respective inputs to perform a mixing operation and provide a speech-enhanced time-frequency audio signal 417 as an output.

In some examples the mixing operation that is performed by the mixer block 517 can be written as:

$$S''(b,n,i) = S'(b,n,i)g(n) + \big(1 - g(n)\big)S(b,n,i)$$

The signal $S''(b,n,i)$ is then the speech-enhanced time-frequency audio signal 417.

The values of the processing parameter 515 determine how much speech is enhanced. In this example $g(n)$ = 1 would result in maximum speech enhancement. That is there would be maximum, or substantially maximum, suppression of all sounds other than speech. Similarly, $g(n)$ = 0 would result in no speech enhancement. That is there would be no suppression of all sounds other than speech. In use the value of the processing parameter 515 can vary between 0 and 1 and depending on the characteristics of the sound scene and the indicated user preferences.

Fig. 6 shows an example structure for a machine learning model 617. The machine learning model 617 can used to perform any suitable block of the methods shown in Figs. 3 to 5. For example, a machine learning model could be used to classify the types of sounds or to estimate a time-frequency mask, and/or to perform any other suitable process

In this example the machine learning model 617 comprises a neural network. Other types of machine learning model 617 could be used in other examples of the disclosure. The machine learning model 617 comprises an input convolution layer 603, a plurality of frequency encoder blocks 605, a recurrent temporal processing block 607, a plurality of frequency decoder blocks 609, an output convolution layer 611 and a sigmoid block 613.

The machine learning model 617 receives input data 601 as an input. The input data 601 can comprise any suitable type of data. The input data 601 can be obtained from the audio signals 205. In some examples the input data 601 can be obtain by performing pre-processing on the audio signals 205. The pre-processing can extract relevant features from the audio signals 205. In other examples machine learning program 617 can be configured so that the input data 601 could comprise the audio signals 205 without any pre-processing

The input data 601 can be provided in a format that enables it to be processed by the machine learning model 617.

In this example the input data 601 is provided in the form: num_T x num_F x num_C where num_T is the number of temporal indices and num_F is the number of frequency bands and num_C is the number of input features.

In this example num_F = 96, num_C = 1, and num_T = 64. The time dimension is used the training phase. When the machine learning model 617 is being used after training for inference, for example when it is being used to determine a portion of the audio signals 205 based on sources of a first category, then num_T = 1. This enables continuous real-time processing of arbitrary length sequences of input data, one frame at a time.

In this example the number of input features is one, of dimension 64 x 96 comprising spectrogram data. In other embodiments there could be more than one input features. For example, there could be oner or more further input features having frequency-embedding data that enables the machine learning model 617 to learn to make differing decisions based on the frequency. Other types and numbers of feature layers could be used in other examples. For example, the number of input features could be 10, where first feature is the spectrogram data, and features 2-10 could provide time-invariant frequency embeddings.

The input data 601 therefore comprises a data array having the dimensions 64 x 96 x 1. The input data 601 can be denoted as $I(n,k,c)$ where $n$ is the temporal index, $k$ is the frequency band index of the network input and c is the feature index.

The machine learning model 617 can be trained with a time-frequency signal sequence $S(b,n,i)$ where $b$ = 1, ..., $N_{bins}$ is the frequency bin index, and $i$ = 1, ..., $N_{ch}$ is the channel index and $n$ = 1, ..., num_T. Therefore, at the training stage the signal sequences for the input data 601 have a length of num_T temporal indices. During inference the input data signal can be of an arbitrary length. During inference the machine learning model 617 can be called for each temporal index $n$ at the continuous processing. Note that the term "channel" in the field of machine learning may refer to the feature dimension of the data, however, in the foregoing it refers to the channel of the provided audio signals 205.

The following discusses frequency bins and frequency bands. A frequency bin refers to a single frequency line of the applied time-frequency transform. A frequency band refers to determined combinations of these frequency bins. In a typical configuration, the frequency bins are uniform in frequency resolution, whereas the frequency bands have a non-uniform frequency resolution, typically a logarithmic-like frequency resolution having wider frequency bandwidths at higher frequencies.

During training the first feature of the input data 601 can be obtained by obtaining the energy value in decibels in frequency bands

$$E_{dB}(k,n) = 10\,log_{10} \sum_{b=b_{low}(k)}^{b_{high}(k)} \sum_{i=1}^{N_{ch}} |S(b,n,i)|^2$$

where $b_{low}(k)$ and $b_{high}(k)$ are the indices for the lowest and highest frequency bins of frequency band $k$. A limiter value $E_{dB\_max}(k)$ is formulated that is the largest of $E_{dB}(k,n)$ over the whole data range $n$ = 1, ...,64 for each band $k$ independently. The data can then be lower-limited by

$$E'_{dB}(k,n) = max\left(E_{dB}(k,n), E_{dB\_max}(k) - 60\right)$$

The data is normalized and set to the first layer of the input data 601 by

$$I(n,k,1) = \frac{E'_{dB}(k,n) - E'_{dB\_mean}(k)}{E'_{dB\_std}(k)}$$

where $E'_{dB\_mean}(k)$ is the mean and $E'_{dB\_std}(k)$ is the standard deviation of $E'_{dB}(k,n)$ over the data range $n$ = 1, ...,64 for each band $k$ independently.

In other embodiments the neural network input could have another feature channel, i.e., num_C = 2. In that case the second feature of the input data 601 could be a frequency map. In this example the frequency map is formulated by first determining a sequence $f_{seq}(k) = k\ for\ k$ = 1, ..., 96 and then by normalization

$$I(n,k,2) = \frac{f_{seq}(k) - mean(f_{seq})}{std(f_{seq})}$$

where the mean and the standard deviation are computed over the whole sequence $k$ = 1, ..., 96.

As shown in Fig. 6 the input data 601 is provided to the first layer of the machine learning model 617. In this example the first layer of the machine learning model 617 comprises an input convolution layer 603. The input convolutional layer is configured to input an array of input data to the machine learning model 617. The input convolution layer 603 can be configured to expand the channels of the input data array into a format that is more suitable for the subsequent layers of the machine learning model 617. In other embodiments the network would not have the input convolution layer 603.

In this example the input convolution layer 603 comprises 32 filters of size 1x1. The input convolution layer 603 maps the input data 601 to a 32 feature space. The output of the input convolution layer 603 has a form of 64 x 96 x 32.

The output of the input convolution layer 603 is provided to the first frequency encoder block $605_1$.

The machine learning model 617 comprises a plurality of frequency encoder blocks 605. In the example of Fig. 6 the machine learning model 617 comprises four frequency encoder blocks 605. The machine learning model 617 can comprise different numbers of frequency encoder blocks 605 in other examples of the disclosure.

Each of the frequency encoder blocks 605 comprise a sequence comprising a plurality of different layers. In this example the frequency encoder blocks 605 comprise a batch normalization layer, a rectified linear unit (ReLU) and a convolution layer. Variations of these layers could be used in examples of the disclosure. For instance, in some examples the batch normalization layer and ReLU layers could be omitted and the frequency encoder could comprise only a convolution layer with exponential linear unit (ELU) activation.

The filters of the frequency encoder blocks 605 comprise a shape of *(1 ×3)* and have stride *(1,2)*. The filters therefore only operate on the frequency dimension. The filters do not operate on the temporal dimension. Having a filter of a size *(1 ×3)* means the convolution is performed only on the frequency dimensions. Having a stride of (1,2) means downsampling by a factor of two on the frequency dimension while the temporal dimension is not downsampled.

The frequency encoder blocks 605 operate on different numbers of output features. In the example of Fig. 6 the frequency encoder blocks 605 operate on the following number of output features:

First frequency encoder block $605_1$: 32;
Second frequency encoder block $605_2$ 64;
Third frequency encoder block $605_3$ 64;
Fourth frequency encoder block $605_4$ 128.

Each frequency encoder block 605, except for the last one provides an output to the next frequency encoder block 605 and also to a corresponding level frequency de-coder block 609. The last frequency encoder block $605_4$ provides the output to the recurrent temporal processing block 607. The output that is provided to the recurrent temporal processing block 607 comprises a data array with dimensions *64 × 6 × 128*. As the data array has passed through the encoder blocks of the machine learning model the frequency dimension in the data array has been reduced to six.

The frequency encoder blocks do not make any combination of information along the time axis. The recurrent temporal processing block 607 is configured to receive the output data array from the last frequency encoder block $605_4$ and perform convolutional long short-term memory (LSTM) processing over the time axis. The LSTM processing can be performed using a kernel size of 1x1 and 32 filters.

The LSTM comprises a recurrent unit. When the machine learning model 617 is being trained the LSTM operates on the 64 time steps of the input data 601.

When the machine learning model 617 is being used for inference, the LSTM can operate on data comprising a single temporal step. The state of the LSTM will determine the output. The LSTM will keep and/or modify its state based on new received data. This enables the LSTM to provide an output based on new input data 601 while taking prior events and data into account. Note that the procedure of using an LSTM is not the only option to take prior events and data into account, whereas a solution of using for example convolution or attention mechanisms along the time axis at any stage of the network structure is also an option.

The output of the recurrent temporal processing block 607 comprises a data array with dimensions $64 \times 6 \times 32$. The output of the recurrent temporal processing block 607 is provided to a frequency decoder block $609_4$.

The frequency decoder blocks 609 only operate on the frequency axis. One of the frequency decoder blocks $609_4$ obtains an input from the recurrent temporal processing block 607. The other frequency decoder blocks $609_1$ - $609_3$ obtain two inputs. The first input is the output of a corresponding frequency encoder block $605_1$ - $605_3$. The second input is the output of the previous frequency decoder block 609.

The frequency decoder blocks $609_1$ - $609_3$ are configured to concatenate the two input data sets on the feature axis for processing. For example, the frequency decoder block $609_3$ receives data from frequency encoder block $605_3$. This data is provided in array having dimensions $64 \times 12 \times 64$. The frequency decoder block $609_3$ also receives an input from the previous frequency decoder block $609_4$. This data is provided in an array having dimensions $64 \times 12 \times 128$. The frequency decoder block $609_3$ is configured to concatenate the two inputs to create a data array having dimensions $64 \times 12 \times 192$.

Each of the frequency decoder blocks 609 comprise a sequence comprising a plurality of different layers. The layers in the frequency decoder blocks 609 can comprise corresponding layers to the layers in the frequency encoder blocks 605. In this example the frequency decoder blocks 609 comprise a batch normalization layer, a rectified linear unit (ReLU) and a transposed convolution layer. Variations of these layers could be used in examples of the disclosure. For instance, in some examples the batch normalization layer and ReLU layers could be omitted and the frequency decoder could comprise only a transposed convolution layer with exponential linear unit (ELU) activation.

The filters of the frequency decoder blocks 609 comprise a shape of $(1 \times 3)$ and have stride $(1,2)$. The filters therefore only operate on the frequency dimension. The filters do not operate on the temporal dimension.

The frequency decoder blocks 609 operate on different numbers of output features. In the example of Fig. 6 the frequency encoder blocks 605 operate on the following number of output features:

First frequency decoder block $609_1$: 32;
Second frequency decoder block $609_2$ 64;
Third frequency decoder block $609_3$ 64;
Fourth frequency decoder block $609_4$ 128.

The output of the first frequency decoder block 609, comprises a data array having dimensions $64 \times 96 \times 32$.

The output of the first frequency decoder block 609, is provided as an input to the output convolution layer 611. The output convolution layer 611 can be configured to convert the dimensions of the data array into a format that is more suitable for output. In the example of Fig. 6 the output convolution layer 611 is configured to apply a $1 \times 1$ convolution with one filter to convert the data array having dimensions $64 \times 96 \times 32$ to a data array having dimensions $64 \times 96 \times 1$.

The output of the output convolution layer 611 is provided to a sigmoid block 613. The sigmoid block 613 is configured to apply a sigmoid function to the data.

The output of the sigmoid block 613 is the output data 615 of the machine learning model 617.

Therefore, when the machine learning model 617 is being trained the machine learning model 617 receives input data in a $64 \times 96 \times 1$ array (in case of no frequency embeddings) and provides output data in a $64 \times 96 \times 1$ array. The input data 601 comprises the spectral information (and the frequency map in case of using frequency embeddings). The output data 615 comprises the gains for each time and frequency within the input data 601.

During inference the machine learning model 617 receives input data in a $1 \times 96 \times 2$ array. During inference the time dimension of the input data 601 is 1 and not 64. The recurrent temporal processing block 607 enables the temporal axis to be accounted for. In this case the model provides an output data in a $1 \times 96 \times 1$ array, i.e., 96 data points having mask gains for 96 frequency bands.

The machine learning model 617 can be trained by using two or more data sets corresponding to different types of audio. The first data set can comprise sources of a first category such as speech. The second data set can comprise other noises such as ambient noise or other sounds that are not the sources of a first category. To enable training of the machine learning model 617 the different data sets are randomly mixed. The random mixing can comprise selecting items from the different sets at random and randomly temporally cropping the items. The gains for each of the selected items can be applied randomly. This can give a random signal to noise ratio for the sources of a first category. The random mixing can comprise summing the signals corresponding to the sources of a first category and the signals corresponding to the other noises. Mixing of the test data in this way can enable a mix signal and a corresponding clean signal representing the sources of a first category to be available. The audio pre-processing can also consist of any other steps, such as variations in spectrum, pitch shifts, distortions and reverberation.

The mixed data sets can be used to formulate the spectral input of the input data 601. This is provided to the machine learning model 617 to enable the machine learning model 617 to predict output data 615. The output data 615 can be used as the gains in each frequency band that are to be used to process the mixed audio signals. The training enables the machine learning model 617 to predict useful gain values.

In some examples the mixed data sets can comprise PCM signals. The PCM signals can have a suitable sampling rate such as 48 kHz. The PCM signals are converted to the time-frequency domain. The PCM signals can be converted to the time-frequency domain by using a short-time Fourier transform (STFT). The STFT can have a sine window, hop size of 1024 samples and FFT size of 2048 samples. The conversion to the time-frequency domain results in a time-frequency signal having 1025 unique frequency bins and 64 time steps, when the length of the mixed data set PCM signals is (64+1)*1024 samples. The frequency bin data can then be converted to the first feature part of input data 601 for the machine learning model 617.

When the output data 615 has been obtained from the machine learning model 617 this can be used to process the time-frequency signal having 1025 unique frequency bins. The output data 615 comprises the predicted gains for the different frequency bins. The output data 615 can comprise 96 values so each *k:th* gain is used to process the frequency bins at the range from $b_{low}(k)$ to $b_{high}(k)$. This can be used to suppress sounds that are not from the sources of a first category.

To enable the training of the machine learning model 617 a loss function can be defined. The loss function provides a value that defines how well the machine learning model 617 is predicting the desired result. To define the loss function, a difference signal is formulated between the ground truth source of a first category signal and the gain-processed mixture. The ground truth source of a first category signal can comprise a clean reference signal comprising the sources of a first category. The loss function formulates the energy of the difference signal with respect to the energy of the mixture in decibels. An Adam optimizer with a learning rate of 0.001 and batch size of 120 can applied during the training.

The training of the machine learning model 617 causes the network weights within the machine learning model 617 to converge. The converged network weights can then be stored in the memory 105 of a device 201 or in any other suitable location.

In some examples a machine learning model 617 having a specific architecture can be trained and then a different machine learning model 617 having a different architecture can be derived from the trained machine learning model 617. Any suitable processes can be used to derive the different machine learning model 617. For example, processes such as compilation, pruning, quantization or distillation can be used to derive the different machine learning model 617.

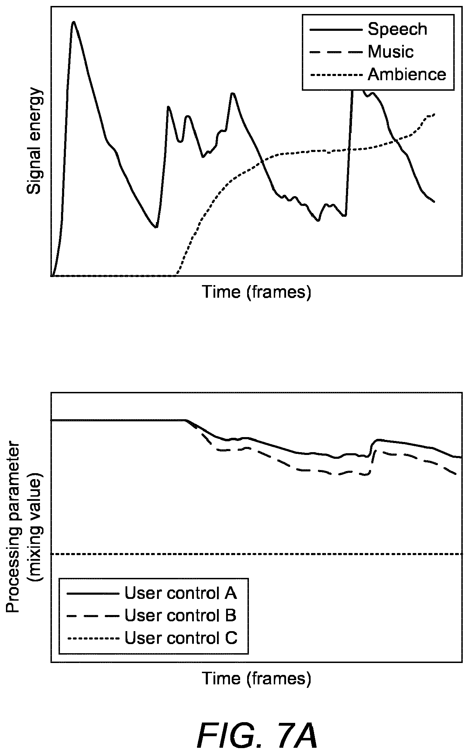

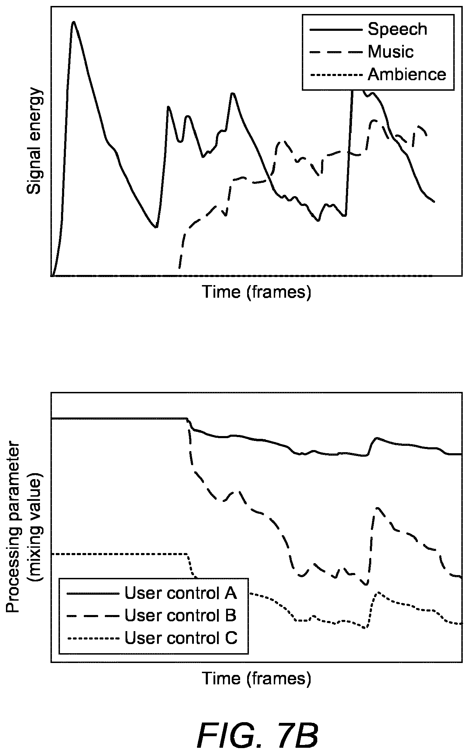

Figs. 7A and 7B show example results obtained using examples of the disclosure. The results shown in Fig. 7A were obtained using a first sound scene and the results shown in Fig. 7B were obtained using a second sound scene. In the first sound scene speech was predominant initially and then ambient sound increased over time. In the second sound scene speech was predominant initially and then music increased over time

The upper plots in Figs. 7A and 7B show the energies of the respective classes of sound. In these examples the classes of sound were speech, music and ambient sound. Other classes and/or combinations of classes could be used in other examples. In the example of Figs. 7A and 7B the energies have been IIR (infinite impulse response) averaged. This means that the plots are idealized energy-weighted classification results of the ground truth signals.

The lower plots shows the processing parameters that would be obtained for the respective sound scenes with three different user preference settings A, B and C.

In the examples of Figs. 7A and 7B the preference setting A is a high speech enhancement setting. Figs. 7A and 7B shows that for the high speech enhancement setting the processing parameter does not change very much even when the dominant class of sound changes. Both Figs. 7A and 7B show that the processing parameter remains close to the maximum value even when speech is no longer a clearly dominant sound class.

The high speech enhancement setting could be suitable for use when the user wishes to remove all sounds other than speech without exception.

In the examples of Figs. 7A and 7B the preference setting B is a speech enhancement setting is configured to preserve music (additionally to the speech). Fig. 7A shows that for this speech enhancement setting the processing parameter does not change very much even when the dominant class of sound changes from speech to ambient because there is no music. However, Fig. 7B shows that when music becomes a prominent sound class the processing parameter is significantly reduced.

In this case, speech can be preserved due to the speech enhancement processing, music can be preserved as appropriate due to the reduced value of the processing parameter when music is determined to be a dominant sound source, and ambience is suppressed.

In the examples of Figs. 7A and 7B the preference setting C is a speech enhancement setting is a conservative setting. Figs. 7A shows that for this speech enhancement setting the processing parameter stays at a lower level and does not change very much even when the dominant class of sound changes from speech to ambient because there is no music. Fig. 7B shows that the processing parameter starts at a low level and drops even lower when music becomes a predominant source. This allows the music in the audio signals to be preserved, or substantially preserved.

Therefore, a user could select one of the speech enhancement levels A, B and C. The processing parameter can be adapted to take into account changes in the sound scene and no further input would be needed from the user. That is the processing parameter adapts to the content being captured and there is not need for any further control input from the user.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one..." or by using "consisting".

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Explicitly indicate that features from different examples (e.g. different methods with different flow charts) can be combined, to

Although functions have been described with reference to certain features, those functions may be performable by other features whether described or not.

Although features have been described with reference to certain examples, those features may also be present in other examples whether described or not.

The term 'a' or 'the' is used in this document with an inclusive not an exclusive meaning. That is any reference to X comprising a/the Y indicates that X may comprise only one Y or may comprise more than one Y unless the context clearly indicates the contrary. If it is intended to use 'a' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. An apparatus comprising means for:

obtaining a control parameter for speech enhancement wherein the control parameter indicates a user preference for speech enhancement;

obtaining one or more audio signals;

processing the one or more audio signals to determine a sound classification based at least on the one or more audio signals;

using the control parameter and the sound classification to determine a processing parameter; and

enabling speech enhancement on the one or more audio signals using the processing parameter such that the processing parameter is configured to control proportions of speech and remainder in an output signal.

2. An apparatus as claimed in claim 1, wherein the control parameter is obtained from a control input made by a user.

3. An apparatus as claimed in claim 2, wherein the control input is made by the user before the one or more audio signals are captured.

4. An apparatus as claimed in any preceding claim, wherein the control parameter comprises a value where the value indicates a proportion of the output signal that should be speech.

5. An apparatus as claimed in any preceding claim, wherein the control parameter comprises a value where the value indicates a proportion for speech relative to remainder in the output signal.

6. An apparatus as claimed in any preceding claim, wherein the sound classification comprises an indication of a probability that respective signals of the one or more audio signals comprise one or more sound categories.

7. An apparatus as claimed in claim 6, wherein a first sound category comprises speech and a second sound category comprises not-speech.

8. An apparatus as claimed in any preceding claim wherein processing the one or more audio signals to determine the sound classification comprises using a machine learning program to classify sounds within the one or more audio signals.

9. An apparatus as claimed in any preceding claim, wherein the means are for using the processing parameter to control mixing of the one or more audio signals.

10. An apparatus as claimed in any preceding claim, wherein the means are for using a product of the control parameter and a value based on the sound classification to determine the processing parameter.

11. An apparatus as claimed in any preceding claim, wherein respective signals of the one or more audio signals comprise one or more channels.

12. An apparatus as claimed in any preceding claim, wherein a machine learning model is used to enable speech enhancement.

13. A method comprising:

obtaining a control parameter for speech enhancement wherein the control parameter indicates a user preference for speech enhancement;

obtaining one or more audio signals;

processing the one or more audio signals to determine a sound classification based at least on the one or more audio signals;

using the control parameter and the sound classification to determine a processing parameter; and

enabling speech enhancement on the one or more audio signals using the processing parameter such that the processing parameter is configured to control proportions of speech and remainder in an output signal.

14. A method as claimed in claim 13, wherein processing the one or more audio signals to determine the sound classification comprises using a machine learning program to classify sounds within the one or more audio signals.

15. A method as claimed in claim 13, wherein a machine learning model is used to enable speech enhancement.

111

101 — Controller

Processor — 103

Memory — 105

Computer program — 107

Computer program code — 109

## FIG. 1

201

203C

205

203A

101

105 — Memory

107 — Computer program

103 — Processor

209

User interface

Storage

Transceiver

207    215    211    213

203B

## FIG. 2

**FIG. 3**

FIG. 4

FIG. 5

*FIG. 6*

EP 4 293 668 A1

FIG. 7A

*FIG. 7B*

Europäisches
Patentamt

European
Patent Office

Office européen
des brevets

# EUROPEAN SEARCH REPORT

**Application Number**

EP 23 17 4984

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2017/052756 A1 (QUALCOMM INC [US]) 30 March 2017 (2017-03-30) * paragraph [0031] – paragraph [0084] * * figures 1,2,3 * ----- | 1–15 | INV. G10L21/0364 |
| A | WO 2015/031505 A1 (DOLBY LAB LICENSING CORP [US]; DOLBY INT AB [NL]) 5 March 2015 (2015-03-05) * figure 3 * ----- | 1–15 | |

**TECHNICAL FIELDS SEARCHED (IPC)**

G10L

The present search report has been drawn up for all claims

| Place of search | Date of completion of the search | Examiner |
|---|---|---|
| The Hague | 9 October 2023 | De Ceulaer, Bart |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 17 4984

This annex lists the patent family members relating to the patent documents cited in the above-mentioned European search report.
The members are as contained in the European Patent Office EDP file on
The European Patent Office is in no way liable for these particulars which are merely given for the purpose of information.

09-10-2023

| Patent document cited in search report | | Publication date | Patent family member(s) | | Publication date |
|---|---|---|---|---|---|
| WO 2017052756 | A1 | 30-03-2017 | BR | 112018006076 A2 | 09-10-2018 |
| | | | CN | 108140399 A | 08-06-2018 |
| | | | EP | 3353788 A1 | 01-08-2018 |
| | | | JP | 2018528479 A | 27-09-2018 |
| | | | KR | 20180056752 A | 29-05-2018 |
| | | | US | 2017092288 A1 | 30-03-2017 |
| | | | WO | 2017052756 A1 | 30-03-2017 |
| WO 2015031505 | A1 | 05-03-2015 | BR | 112016004299 A2 | 01-08-2017 |
| | | | BR | 122020017207 B1 | 06-12-2022 |
| | | | CN | 105493182 A | 13-04-2016 |
| | | | CN | 110890101 A | 17-03-2020 |
| | | | EP | 3039675 A1 | 06-07-2016 |
| | | | EP | 3503095 A1 | 26-06-2019 |
| | | | ES | 2700246 T3 | 14-02-2019 |
| | | | HK | 1222470 A1 | 30-06-2017 |
| | | | JP | 6001814 B1 | 05-10-2016 |
| | | | JP | 2016534377 A | 04-11-2016 |
| | | | KR | 20160037219 A | 05-04-2016 |
| | | | RU | 2016106975 A | 29-08-2017 |
| | | | US | 2016225387 A1 | 04-08-2016 |
| | | | US | 2019057713 A1 | 21-02-2019 |
| | | | WO | 2015031505 A1 | 05-03-2015 |

EPO FORM P0459

For more details about this annex : see Official Journal of the European Patent Office, No. 12/82